# FASCICULE DE BREVET EUROPEEN

(11) **EP 3 498 563 B1**
(45) Date de publication et mention de la délivrance du brevet: **16.02.2022**
(21) Numéro de dépôt: 18212408.1
(22) Date de dépôt: 13.12.2018
(51) Int. Cl.: B61D 17/04

(54) **CAISSE DE VÉHICULE FERROVIAIRE ET PROCÉDÉ ASSOCIÉ**
KAROSSERIE EINES SCHIENENFAHRZEUGS, UND ENTSPRECHENDES VERFAHREN
RAILWAY VEHICLE BODY AND ASSOCIATED METHOD

(30) Priorité: 13.12.2017 FR 1762075
(43) Date de publication de la demande: 19.06.2019
(73) Titulaire: ALSTOM Transport Technologies, 93400 Saint-Ouen (FR)
(72) Inventeur: AWTUCH, Bernard, 59230 Château L'Abbaye (FR); LALOYAUX, Laurent, 59296 AVESNES-LE-SEC (FR)
(74) Mandataire: Lavoix

(56) Documents cités:
- EP-A1- 3 165 421
- WO-A1-02/058981
- WO-A1-2004/058553
- ALTENBURG K ET AL: "ESIE.CAR - DIE INNOVATIVE WAGENKASTENTECHNOLOGIE FUER WIRTSCHAFTLICHE REGIONALZUEGE VON SIEMENS//ESIE.CAR - THE INNOVATIVE MODULAR CAR BODY TECHNOLOGY FOR ECONOMICAL REGIONAL TRAINSETS FROM SIEMENS", ZEVRAIL - GLASERS ANNALEN, GEORG SIEMENS VERLAG, BERLIN, DE, vol. 128, 1 juin 2004 (2004-06-01), pages 208-215, XP001196845, ISSN: 1618-8330
- GERHARD T ET AL: "ERFAHRUNGSBERICHT ESIE.CAR - MODULARES WAGENKASTENKONZEPT FUER WIRTSCHAFTLICHE REGIONALTRIEBZUEGE DER ZUKUNFT//EXPERIENCE REPORT ESIE-CAR - MODULAR CARBODY-CONCEPT FOR ECONOMICAL FUTURE REGIONAL TRAINS-SETS", ZEVRAIL - GLASERS ANNALEN, GEORG SIEMENS VERLAG, BERLIN, DE, vol. 129, no. 10, 1 octobre 2005 (2005-10-01), page 404, XP001234557, ISSN: 1618-8330

## Description

La présente invention concerne une caisse de véhicule ferroviaire, la caisse étant du type comprenant au moins un module de plancher, au moins un module de paroi et au moins un module de pavillon, les modules étant connectés entre eux par des rivets.

L'invention concerne également un procédé de fabrication de la caisse.

L'invention s'applique plus particulièrement aux caisses de véhicules ferroviaires du type tramway, métro, trains interrégionaux et autres.

L'article de Altenburg et al. intitulé « eSIE.CAR - Die innovative Wagenkastentechnologie für wirtschaftliche Regionalzüge von Siemens » et l'article de Gerhard et al. intitulé « Erfahrungsbericht eSIE.CAR - Modulares Wagenkastenkonzept für wirtschaftliche Regionaltriebzüge der Zukunft » décrivent chacun des concepts de châssis modulaire pour des trains.

Le document EP 3 165 421 A1 décrit une structure module de véhicule ferroviaire simplifiée.

Il est connu des caisses de véhicules ferroviaires comprenant un ou plusieurs modules de paroi, un ou plusieurs modules de plancher et un ou plusieurs modules de pavillon.

Lors de l'assemblage de la caisse, ces modules sont connectés entre eux par exemple par soudage.

Cependant, l'assemblage par soudage est susceptible d'entraîner une déformation des modules et rend ainsi difficile le processus d'assemblage de telles caisses.

Pour éviter une déformation de la caisse lors de l'assemblage, il est connu, en outre, la connexion des modules par rivetage.

Cependant, un très grand nombre de rivets, par exemple deux mille, est nécessaire pour assurer une connexion rigide et fiable entre les modules. Ceci aboutit à un poids élevé de la caisse du véhicule ferroviaire et rend l'assemblage de la caisse compliqué et couteux.

Un but de l'invention est de réduire le nombre de rivets, tout en garantissant une liaison rigide et sûre entre les modules.

A cet effet, l'invention a pour objet une caisse de véhicule ferroviaire selon la revendication 1.

Selon des modes de réalisation particuliers de l'invention, la caisse de véhicule ferroviaire présente également une ou plusieurs des caractéristiques selon les revendication 2 à 9.

L'invention a également pour objet un procédé de fabrication selon la revendication 10.

Selon un mode de réalisation particulier de l'invention, le procédé de fabrication est selon la revendication 11.

D'autres caractéristiques et avantages de l'invention apparaîtront à la lecture de la description détaillée qui va suivre, donnée uniquement à titre d'exemple et faite en se référant aux dessins annexés, parmi lesquels :
- la figure 1 est une vue éclatée, en perspective, d'une caisse de véhicule ferroviaire selon l'invention ;
- la figure 2 est une vue de côté de la caisse de la figure 1, représentée déformée pour illustrer les contraintes auxquelles la caisse est soumise lors de l'application sur cette dernière de charges statiques et dynamiques ; et
- la figure 3 est une vue de côté d'un détail d'une jonction d'un module de paroi à un module de plancher appartenant à la caisse de la figure 1.

Dans la description, les termes « sur », « sous », « au-dessus », « en-dessous », « supérieur » et « inférieur » sont définis par rapport à une direction d'élévation d'un véhicule ferroviaire lorsqu'il est disposé sur des rails, c'est-à-dire une direction sensiblement verticale lorsque le train circule sur des rails horizontaux. La direction longitudinale est définie par la direction de circulation du véhicule ferroviaire et la direction transversale est la direction sensiblement perpendiculaire à la direction longitudinale et à la direction d'élévation du véhicule ferroviaire.

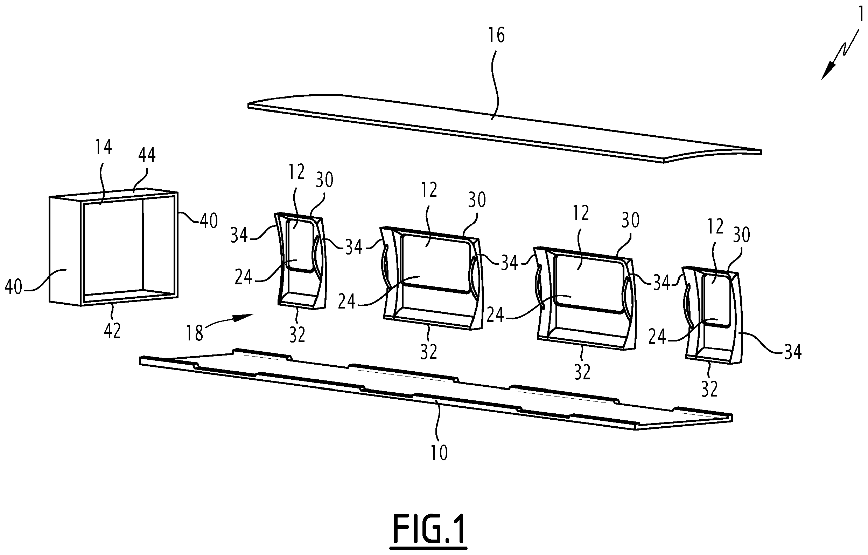

La caisse 1 de véhicule ferroviaire représentée sur la figure 1 comprend un module de plancher 10, des modules de paroi 12, des modules d'extrémité 14 et un module de pavillon 16. On notera que, dans la Figure 1, ne sont représentés que les modules de paroi 12 d'un premier côté des modules de plancher 10 et de pavillon 16, et un unique module d'extrémité 14 disposé à une première extrémité longitudinale des modules de plancher 10 et de pavillon 16 ; néanmoins, la caisse 1 comprend également d'autres modules de paroi 12, non représentés, disposés symétriquement aux modules de paroi 12 visibles, du côté opposé des modules 10 et 16, et un autre module d'extrémité 14, lui aussi non représenté, disposé à une deuxième extrémité longitudinale des modules de plancher 10 et de pavillon 16 opposée à la première extrémité.

En variante, la caisse 1 comprend, de chaque côté des modules de plancher 10 et de pavillon 16, un module de paroi 12 unique.

Les modules de plancher 10, de paroi 12, d'extrémité 14 et de pavillon 16 délimitent un espace intérieur 18 à la caisse 1 destiné à recevoir des occupants du véhicule ferroviaire et/ou des équipements.

Dans un exemple, les modules 10, 12, 14, 16 comprennent des dispositifs électroniques, non représentés. Les modules de plancher 10, de paroi 12 d'extrémité 14 et de pavillon 16 sont, par exemple, connectés électriquement entre eux par des connecteurs, non représentés.

De préférence, les modules de plancher 10, de paroi 12 d'extrémité 14 et de pavillon 16 sont des modules pré-équipés.

En variante, uniquement un module parmi les modules 10, 12, 14 et 16 est un module pré-équipé.

Par « module pré-équipé », on comprend un module comprenant des composants assemblés préalablement à l'assemblage du module aux autres modules de la caisse 1.

Un module pré-équipé est, par exemple, configuré pour être contrôlé individuellement à une station de contrôle prévue à cet effet, au niveau de laquelle est par exemple contrôlée l'installation et/ou le fonctionnement correct de composants et/ou de dispositifs électroniques dudit module pré-équipé.

Le module de plancher 10 s'étend dans un plan horizontal. Le module de plancher 10 est disposé en-dessous du module de pavillon 16 et est sensiblement perpendiculaire aux modules de paroi 12 et d'extrémité 14.

Le module de plancher 10 comprend, par exemple, une structure métallique configurée pour supporter le poids des occupants ou des équipements, non représentés, du véhicule ferroviaire. Le module de plancher 10 comprend en outre un plancher par exemple en bois ou en composite ou multi matériaux fixé sur une face supérieure de la structure. Le plancher constitue typiquement un plancher destiné à recevoir des occupants du véhicule ferroviaire et/ou des équipements du véhicule ferroviaire.

Le module de plancher 10 est connecté aux modules de paroi 12 et au module d'extrémité 14.

Chaque module de paroi 12 s'étend dans un plan vertical, perpendiculairement à la direction transversale. Une première partie des modules de paroi 12 forment ensemble une première paroi latérale de la caisse 1 et une deuxième partie des modules de paroi 12 forment ensemble une deuxième paroi latérale de la caisse 1, lesdites première et deuxième parois latérales délimitant l'espace intérieur 18 transversalement.

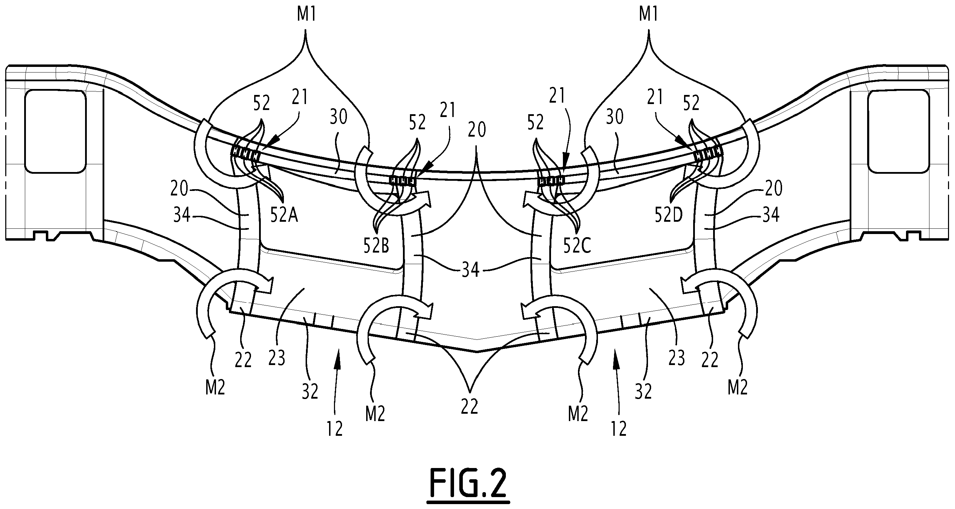

Comme visible en particulier sur la figure 2, chaque module de paroi 12 comprend une structure porteuse comprenant des montants 20 reliant chacun le module de plancher 10 au module de pavillon 16. Ces montants 20 incluent et, dans l'exemple représenté, sont constitués par des montants de porte délimitant chacun une bordure d'une porte ménagée dans l'une des parois latérales de la caisse 1.

Les montants 20 comprennent chacun une extrémité supérieure 21 et une extrémité inférieure 22.

L'extrémité supérieure 21 est connectée au module de pavillon 16. Elle forme un nœud de tension de la caisse 1. Dans l'exemple de la figure 2, des contraintes en torsion sont présentes dans l'extrémité supérieure 21, lesdites contraintes correspondant à un couple M1 s'exerçant autour d'un axe transversal et dans un premier sens.

L'extrémité inférieure 22 est connectée au module de plancher 10. Elle forme un nœud de tension de la caisse 1. Dans l'exemple de la figure 2, des contraintes en torsion sont présentes dans l'extrémité inférieure 22, lesdites contraintes correspondant à un couple M2 s'exerçant autour d'un axe transversal et dans un deuxième sens opposé au premier.

Ces contraintes sont typiquement produites par le poids de la caisse 1, des passagers, des équipements et des efforts exercés aux extrémités longitudinales de la caisse par des caisses adjacentes (non représentées).

Le couple M1 est typiquement d'une intensité moindre que le couple M2

Chaque module de paroi 12 comprend, en outre, au moins une tôle métallique 23 fixée entre deux montants 20, et au moins une fenêtre 24 montée entre deux montants 20, au-dessus d'une tôle métallique 23.

Chaque module de paroi 12 présente un bord supérieur 30, un bord inférieur 32 et des bords longitudinaux 34.

Le bord supérieur 30 est connecté au module de pavillon 16. Le bord inférieur 32 est connecté au module de plancher 10. Les connexions entre les modules 10, 12, 16 sont décrites plus en détail ci-dessous.

Les bords longitudinaux 34 sont formés par les montants 20.

Chaque module d'extrémité 14 comprend des poutres verticales 40 et des poutres horizontales 42, 44, dont une poutre inférieure 42 et une poutre supérieure 44.

Les poutres verticales 40 sont connectées aux modules de paroi 12, la poutre horizontale 42 est connectée au module de plancher 10 et la poutre horizontale 44 est connectée au module de pavillon 16.

Le module de pavillon 16 comprend, par exemple, une structure voûtée et une tôle fixée sur la structure voûtée, non représentées.

Le module de pavillon 16 est connecté au bord supérieur 30 de chaque module de paroi 12 et à la poutre supérieure 44 de chaque module d'extrémité 14.

La connexion entre les modules 10, 12, 14, 16 est réalisée par des rivets. Les rivets comprennent des rivets inférieurs 50 et des rivets supérieurs 52.

Les rivets inférieurs 50 connectent chaque module de paroi 12 au module de plancher 10.

Notamment, les rivets inférieurs 50 comprennent des groupes de rivets de rigidification 54 disposés dans des régions de la caisse 1 concentrant les couples M2.

Ces groupes de rivets de rigidification 54 sont, par exemple, disposés à l'extrémité inférieure 22 de chaque montant 20.

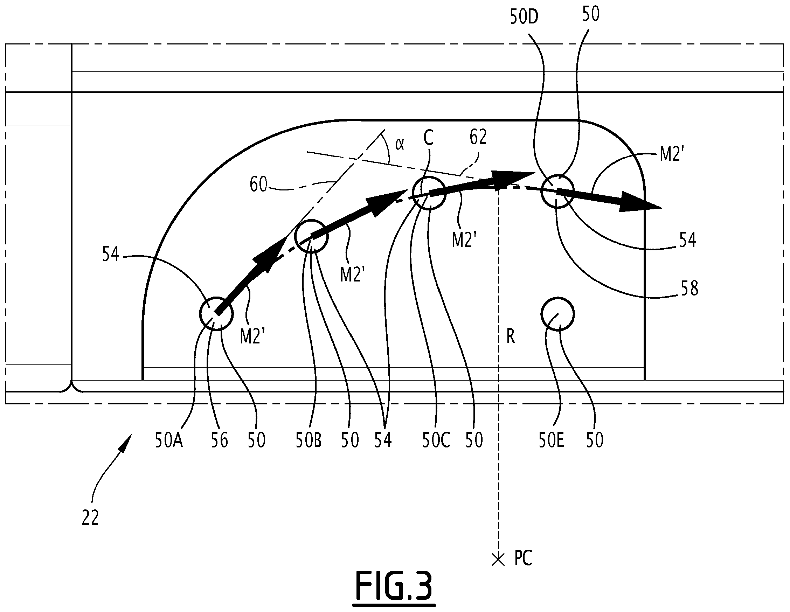

En référence à la Figure 3, chaque groupe de rivets de rigidification 54 comprend au moins trois rivets de rigidification 50A, 50B, 50C et 50D. Ces rivets de rigidification 50A, 50B, 50C et 50D sont, dans l'exemple représenté, au nombre de quatre.

Les rivets de rigidification 50A, 50B, 50C et 50D s'étendent chacun selon la direction transversale de la caisse 1. Les têtes des rivets de rigidification 50A, 50B, 50C et 50D sont agencées dans un plan vertical, perpendiculaire à la direction transversale de la caisse 1.

De préférence, au sein de chaque groupe 54, les diamètres des rivets de rigidification 50A, 50B, 50C et 50D sont égaux les uns aux autres.

Les rivets de rigidification 50A, 50B, 50C et 50D sont agencés en fonction d'une distribution de contraintes mécaniques dans l'extrémité inférieure 22.

A cet effet, au sein de chaque groupe 54, les rivets de rigidification 50A, 50B, 50C et 50D dudit groupe 54 sont agencés suivant une courbe C formée dans un plan perpendiculaire à une direction transversale de la caisse 1. En d'autres termes, ces rivets de rigidification 50A, 50B, 50C, 50D sont disposés de telle façon qu'il est possible de faire passer par lesdits rivets de rigidification 50A, 50B, 50C, 50D une courbe C commune contenue dans un plan perpendiculaire à une direction transversale de la caisse 1.

Par « courbe », on comprend une ligne dépourvue de portion droite.

Cette courbe C est dépourvue de point d'inflexion et elle est continûment dérivable. Par « continûment dérivable », on comprend que, lorsqu'on considère la courbe C dans le plan comme une fonction mathématique, cette fonction est au moins de classe C¹, c'est-à-dire qu'elle est dérivable en tout point, la dérivée étant elle-même continue.

La courbe C s'étend d'une première extrémité 56 à une deuxième extrémité 58 opposée, lesdites extrémités 56, 58 étant définies respectivement par un premier rivet de rigidification 50A et par un deuxième rivet de rigidification 50D, lesdits premier et deuxième rivets de rigidification 50A, 50D encadrant longitudinalement les autres rivets de rigidification 50B, 50C du groupe 54. La courbe C présente à sa première extrémité 56 une première tangente 60, et à sa deuxième extrémité 58 une deuxième tangente 62, l'angle α entre lesdites première et deuxième tangentes 60, 62 étant inférieur ou égal à 90°, en particulier inférieur ou égal à 70°, ledit angle α étant mesuré dans le sens horaire depuis la première tangente 60 jusqu'à la deuxième tangente 62.

La courbe C est choisie de sorte que, pour chaque rivet de rigidification 50A, 50B, 50C, 50D, des efforts de cisaillement M2' s'exerçant sur le rivet 50A, 50B, 50C, 50D soient orientés suivant une direction sensiblement tangente à la courbe C. Par « direction sensiblement tangente », on comprend que l'angle entre ladite direction et la tangente à la courbe C doit être inférieur à 10 degrés, de préférence 5 degrés.

La distribution des contraintes est, par exemple, déterminée par mesure sur un modèle de la caisse 1. Ce modèle est de préférence un modèle numérique, la distribution des contraintes étant déterminée par une simulation numérique desdites contraintes par exemple par simulation selon la méthode des éléments finis.

L'homme du métier comprendra que d'autres contraintes, non représentés, inférieures aux contraintes mécaniques dues au couple M2, peuvent être présentes dans l'extrémité inférieure 22. Dans l'exemple de la figure 3, les contraintes de torsion constituent les contraintes principales dans l'extrémité inférieure 22.

Les contraintes mécaniques de torsion sont notamment présentes le long de la courbe C.

Dans l'exemple représenté, la courbe C est en forme d'arc de cercle dans le plan perpendiculaire à la direction transversale.

Cet arc de cercle présente un point central PC et un rayon R. Le rayon R est, par exemple, compris entre 100mm et 200mm de préférence entre 135mm et 175mm.

Les rivets supérieurs 52 connectent chaque module de paroi 12 au module de pavillon 16.

Comme visible sur la figure 2, les rivets supérieurs 52 comprennent des groupes de rivets linéaires 52A, 52B, 52C. Chaque groupe de rivets linéaires 52A, 52B, 52C comprend au moins trois rivets supérieurs 52 alignés les uns avec les autres au sein du groupe de rivets linéaires 52A, 52B, 52C.

En d'autres termes, les rivets supérieurs 52 sont disposés suivant une droite. Cette droite s'étend, par exemple, selon la direction longitudinale.

Un procédé de fabrication de la caisse va être à présent décrit.

Lors d'une première étape de conception de la caisse 1, un modèle informatique de la caisse 1 est construit, tel qu'un modèle généré par CAO (Conception Assistée par Ordinateur), puis des charges statiques et dynamiques sont appliquées sur ce modèle, et les contraintes résultantes dans la caisse 1 sont calculées par un calcul de structure par éléments finis.

Notamment, les contraintes résultant des charges statiques et/ou dynamiques appliquées dans le modèle de la caisse 1, à une interface entre les modules de paroi 12 et de plancher 10 sont mesurées.

Après l'étape de conception, lors d'une étape de validation de la caisse 1 par essais, les contraintes sont mesurées sur un modèle physique de la caisse 1, par un équipement destiné à la mesure de contraintes dans ledit modèle physique. Plus précisément, les contraintes résultant de charges statiques et/ou dynamiques appliquées dans le modèle physique de la caisse 1 sont mesurées, à l'interface entre les modules de paroi 12 et de plancher 10 afin de valider la distribution des rivets 50, 54.

Ensuite, lors d'une étape de production de la caisse 1, la caisse 1 est produite et assemblée. L'étape de production comprend par exemple un pré-équipement de chaque module 10, 12, 14, 16 et un assemblage des modules 10, 12, 14, 16 entre eux.

Lors du pré-équipement de chaque module 10, 12, 14, 16, les composants de chaque module 10, 12, 14, 16 sont assemblés. En d'autres termes, chaque module 10, 12, 14, 16 est équipé avant l'assemblage de la caisse 1.

Chaque module pré-équipé est ensuite, de préférence, contrôlé à une station de contrôle. Par exemple, l'installation ou le fonctionnement correct de composants du module pré-équipé est contrôlé.

Ce pré-équipement est optionnel.

Puis, lors de l'assemblage, les modules de plancher 10, de paroi 12 et de pavillon 16 sont fixés entre eux par des rivets. Optionnellement, le module d'extrémité 14 est fixé aux autres modules 10, 12, 16 par des rivets.

Notamment, les rivets de rigidification 50A, 50B, 50C et 50D sont répartis au sein de chaque groupe 54 suivant une courbe formée dans le plan perpendiculaire à la direction transversale de la caisse 1.

Les rivets de rigidification 50A, 50B, 50C et 50D sont disposés en fonction des contraintes mesurées dans la caisse 1. En particulier, les rivets 50A, 50B, 50C et 50D sont disposés dans des régions où se concentrent des contraintes mécaniques de torsion.

On conçoit que la caisse 1 de véhicule ferroviaire permet de réduire le nombre de rivets nécessaires, tout en conservant une stabilité suffisante. Par exemple, en maintenant la même stabilité de connexions entre les modules 10, 12, 14, 16, le nombre de rivets nécessaires est réduit de deux mille à deux cents.

Le fait d'agencer les rivets 50A, 50B, 50C et 50D en fonction des contraintes mécaniques permet de répartir la charge mécanique de manière égale entre ces rivets 50A, 50B, 50C et 50D. En d'autres termes, chaque rivet 50A, 50B, 50C et 50D supporte un effort uniforme.

Ainsi, le diamètre des rivets 50A, 50B, 50C et 50D peut être optimisé en fonction d'une charge uniforme, et non en fonction d'une charge maximale.

## Revendications

1. Caisse (1) de véhicule ferroviaire, la caisse (1) comprenant au moins un module de plancher (10), au moins un module de paroi (12) et au moins un module de pavillon (16), les modules (10, 12, 16) étant connectés entre eux par des rivets (50, 52),
les rivets (50, 52) comprenant des rivets inférieurs (50) connectant le ou chaque module de paroi (12) au ou à chaque module de plancher (10), les rivets inférieurs (50) comprenant au moins un groupe de rivets de rigidification (54), le ou chaque groupe de rivets de rigidification (54) comportant au moins trois rivets de rigidification (50A, 50B, 50C, 50D) qui sont tous agencés suivant une courbe (C) formée dans un plan perpendiculaire à une direction transversale de la caisse (1), la courbe (C) étant continûment dérivable, dépourvue de point d'inflexion, et présentant une première extrémité (56) avec une première tangente (60) et une deuxième extrémité (58) avec une deuxième tangente (62), lesdites première et deuxième tangentes (60, 62) formant entre elles un angle (a) inférieur ou égal à 90°, l'angle (a) étant mesuré dans le sens horaire depuis la première tangente (60) jusqu'à la deuxième tangente (62),
**caractérisée en ce que**, pour le ou chaque groupe de rivets de rigidification (54), les rivets de rigidification (50A, 50B, 50C, 50D) dudit groupe (54) sont agencés en fonction d'une distribution des contraintes mécaniques de torsion dans chaque module de paroi (12).

2. Caisse (1) de véhicule ferroviaire selon la revendication 1, dans laquelle la courbe (C) est en forme d'arc de cercle.

3. Caisse (1) de véhicule ferroviaire selon la revendication 1 ou 2, dans lequel le ou chaque groupe de rivets de rigidification (54) comporte au moins quatre rivets de rigidification (50A, 50B, 50C, 50D).

4. Caisse (1) de véhicule ferroviaire selon l'une quelconque des revendications 1 à 3, dans laquelle les rivets de rigidification (50A, 50B, 50C, 50D) sont disposés dans des régions de la caisse (1) concentrant des couples (M2) autour d'axes transversaux à une direction longitudinale de la caisse (1).

5. Caisse (1) de véhicule ferroviaire selon l'une quelconque des revendications 1 à 4, dans lequel le ou chaque module de paroi (12) comprend au moins un montant (20), au moins un groupe de rivets de rigidification (54) étant disposé à une extrémité inférieure (22) du ou de chaque montant (20).

6. Caisse (1) de véhicule ferroviaire selon l'une quelconque des revendications 1 à 5, dans laquelle, pour le ou chaque groupe de rivets de rigidification (54), le diamètre de chaque rivet de rigidification (50A, 50B, 50C, 50D) dudit groupe (54) est égal au diamètre de chaque autre rivet de rigidification (50A, 50B, 50C, 50D) dudit groupe (54).

7. Caisse (1) de véhicule ferroviaire selon l'une quelconque des revendications 1 à 6, dans laquelle les rivets comprennent des rivets supérieurs (52) connectant le ou chaque module de paroi (12) au ou à chaque module de pavillon (16), lesdits rivets supérieurs (52) comprenant des groupes de rivets linéaires (52A, 52B, 52C), chaque groupe (52A, 52B, 52C) comprenant au moins trois rivets supérieurs (52) alignés les uns avec les autres.

8. Caisse (1) de véhicule ferroviaire selon l'une quelconque des revendications 1 à 7, dans lequel au moins un des modules parmi les modules de plancher (10), de paroi (12) et de pavillon (16) est constitué par un module pré-équipé.

9. Caisse (1) de véhicule ferroviaire selon l'une quelconque des revendications 1 à 8, dans laquelle les modules (10, 12, 16) sont connectés électriquement entre eux par des connecteurs.

10. Procédé de fabrication d'une caisse (1) de véhicule ferroviaire selon l'une quelconque des revendications 1 à 9, la caisse (1) comprenant au moins un module de plancher (10), au moins un module de paroi (12) et au moins un module de pavillon (16), le procédé comprenant les étapes suivantes :
- la conception d'un modèle de la caisse (1), en appliquant sur ce modèle de la caisse (1) des charges statiques et/ou dynamiques afin de calculer des contraintes résultantes ; et
- la production de la caisse (1), la caisse (1) étant assemblée par fixation des modules de plancher (10), de paroi (12) et de pavillon (16) entre eux par des rivets (50, 52), les rivets (50, 52) comprenant des rivets inférieurs (50) connectant le ou chaque module de paroi (12) au ou à chaque module de plancher (10), les rivets inférieurs (50) comprenant au moins un groupe de rivets de rigidification (54) comportant au moins trois rivets de rigidification (50A, 50B, 50C, 50D) agencés en fonction de la distribution dans la caisse (1) des contraintes calculées au cours de l'étape de conception,
les rivets de rigidification (50A, 50B, 50C, 50D) étant disposés dans des régions où se concentrent des contraintes mécaniques de torsion.

11. Procédé de fabrication selon la revendication 10, dans lequel le modèle conçu lors de l'étape de conception est un modèle informatique, le procédé comprenant entre les étapes de conception et de production une étape intermédiaire de validation de la caisse (1) par essais, lors de laquelle un modèle physique de la caisse (1) est au moins partiellement assemblé et des contraintes résultant de charges statiques et/ou dynamiques appliquées dans ce modèle physique sont mesurées, à une interface entre le ou chaque module de paroi (12) et le ou chaque module de plancher (10), afin de valider la distribution de rivets (50, 52) et dans lequel lors de l'étape de production les rivets de rigidification (50A, 50B, 50C, 50D) sont agencés en fonction de résultats de l'étape de validation.

## Patentansprüche

1. Wagenkasten (1) eines Schienenfahrzeugs, der Wagenkasten (1) umfassend mindestens ein Bodenmodul (10), mindestens ein Wandmodul (12) und mindestens ein Dachmodul (16), wobei die Module (10, 12, 16) durch Nieten (50, 52) miteinander verbunden sind,
die Nieten (50, 52) umfassend untere Nieten (50), die das oder jedes Wandmodul (12) mit dem oder jedem Bodenmodul (10) verbinden, die unteren Nieten (50) umfassend mindestens eine Gruppe von Versteifungsnieten (54), wobei die oder jede Gruppe von Versteifungsnieten (54) mindestens drei Versteifungsnieten (50A, 50B, 50C, 50D) umfasst, die alle entlang einer Kurve (C) angeordnet sind, die in einer Ebene senkrecht zu einer Querrichtung der Kiste (1) gebildet ist, wobei die Kurve (C) kontinuierlich ableitbar ist, keinen Wendepunkt aufweist und ein erstes Ende (56) mit einer ersten Tangente (60) und ein zweites Ende (58) mit einer zweiten Tangente (62) aufweist, wobei die erste und die zweite Tangente (60, 62) untereinander einen Winkel (a) bilden, der kleiner als oder gleich wie 90° ist, wobei der Winkel (a) im Uhrzeigersinn von der ersten Tangente (60) bis zu der zweiten Tangente (62) gemessen wird,
**dadurch gekennzeichnet, dass** für die oder jede Gruppe von Versteifungsnieten (54) die Versteifungsnieten (50A, 50B, 50C, 50D) der Gruppe (54) abhängig von einer Verteilung der mechanischen Torsionsspannungen in jedem Wandmodul (12) angeordnet sind.

2. Wagenkasten (1) eines Schienenfahrzeugs nach Anspruch 1, wobei die Kurve (C) kreisbogenförmig ist.

3. Wagenkasten (1) eines Schienenfahrzeugs nach Anspruch 1 oder 2, wobei die oder jede Gruppe von Versteifungsnieten (54) mindestens vier Versteifungsnieten (50A, 50B, 50C, 50D) aufweist.

4. Wagenkasten (1) eines Schienenfahrzeugs nach einem der Ansprüche 1 bis 3, wobei die Versteifungsnieten (50A, 50B, 50C, 50D) in Bereichen des Wagenkastens (1) angeordnet sind, die Drehmomente (M2) um Achsen konzentrieren, die quer zu einer Längsrichtung des Wagenkastens (1) sind.

5. Wagenkasten (1) eines Schienenfahrzeugs nach einem der Ansprüche 1 bis 4, wobei das oder jedes Wandmodul (12) mindestens eine Säule (20) umfasst, wobei mindestens eine Gruppe von Versteifungsnieten (54) an einem unteren Ende (22) der oder jeder Säule (20) angeordnet ist.

6. Wagenkasten (1) eines Schienenfahrzeugs nach einem der Ansprüche 1 bis 5, wobei für die oder jede Gruppe von Versteifungsnieten (54) der Durchmesser jedes Versteifungsniets (50A, 50B, 50C, 50D) der Gruppe (54) gleich wie der Durchmesser von jedem anderen Versteifungsniet (50A, 50B, 50C, 50D) der Gruppe (54) ist.

7. Wagenkasten (1) eines Schienenfahrzeugs nach einem der Ansprüche 1 bis 6, wobei die Nieten obere Nieten (52) umfassen, die das oder jedes Wandmodul (12) mit dem oder jedem Dachmodul (16) verbinden, wobei die oberen Nieten (52) Gruppen von linearen Nieten (52A, 52B, 52C) umfassen, wobei jede Gruppe (52A, 52B, 52C) mindestens drei obere Nieten (52) umfasst, die untereinander ausgerichtet sind.

8. Wagenkasten (1) eines Schienenfahrzeugs nach einem der Ansprüche 1 bis 7, wobei mindestens eines der Module von Boden (10), Wand (12) und Dach (16) aus einem vorbestückten Modul besteht.

9. Wagenkasten (1) eines Schienenfahrzeugs nach einem der Ansprüche 1 bis 8, wobei die Module (10, 12, 16) durch Verbinder elektrisch miteinander verbunden sind.

10. Verfahren zur Herstellung eines Wagenkastens (1) eines Schienenfahrzeugs nach einem der Ansprüche 1 bis 9, wobei der Wagenkasten (1) mindestens ein Bodenmodul (10), mindestens ein Wandmodul (12) und mindestens ein Dachmodul (16) umfasst, das Verfahren umfassend die folgenden Schritte:
- Entwerfen eines Modells des Wagenkastens (1), indem auf dieses Modell des Wagenkastens (1) statische und/oder dynamische Lasten angewendet werden, um die resultierenden Spannungen zu berechnen; und
- Herstellen des Wagenkastens (1), wobei der Wagenkasten (1) durch Befestigen der Boden- (10), Wand- (12) und Dachmodule (16) aneinander mittels Nieten (50, 52) zusammengebaut wird, wobei die Nieten (50, 52) untere Nieten (50) umfassen, die das oder jedes Wandmodul (12) mit dem oder jedem Bodenmodul (10) verbinden, wobei die unteren Nieten (50) mindestens eine Gruppe von Versteifungsnieten (54) mit mindestens drei Versteifungsnieten (50A, 50B, 50C, 50D) umfassen, die abhängig von der Verteilung der in dem Entwurfsschritt berechneten Spannungen in dem Wagenkasten (1) angeordnet sind, wobei die Versteifungsnieten (50A, 50B, 50C, 50D) in Bereichen angeordnet sind, in denen sich mechanische Torsionsspannungen konzentrieren.

11. Herstellungsverfahren nach Anspruch 10, wobei das in dem Entwurfsschritt entworfene Modell ein Computermodell ist, wobei das Verfahren zwischen den Entwurfs- und Produktionsschritten einen Zwischenschritt zum Validieren des Wagenkastens (1) durch Versuche umfasst, bei dem ein physikalisches Modell der Kiste (1) zumindest teilweise zusammengebaut wird und Spannungen gemessen werden, die aus statischen und/oder dynamischen Lasten resultieren, die in diesem physikalischen Modell an einer Schnittstelle zwischen dem oder jedem Wandmodul (12) und dem oder jedem Bodenmodul (10) aufgebracht werden, um die Verteilung von Nieten (50, 52) zu validieren, und wobei während des Produktionsschritts die Versteifungsnieten (50A, 50B, 50C, 50D) abhängig von den Resultaten des Validierungsschritts angeordnet werden.

## Claims

1. A railway vehicle body (1), the body (1) comprising at least one floor module (10), at least one wall module (12) and at least one roof module (16), the modules (10, 12, 16) being connected to one another by rivets (50, 52),
the rivets (50, 52) comprising lower rivets (50) connecting the or each wall module (12) to the or each floor module (10), the lower rivets (50) comprising at least one group of stiffening rivets (54), the or each group of stiffening rivets (54) including at least three stiffening rivets (50A, 50B, 50C, 50D) that are all arranged along a curve (C) formed in a plane perpendicular to a transverse direction of the body (1), the curve (C) being continuously differentiable, provided with no inflection point, and having a first end (56) with a first tangent (60) and a second end (58) with a second tangent (62), said first and second tangents (60, 62) forming an angle (α) between them smaller than or equal to 90°, the angle (α) being measured in the clockwise direction from the first tangent (60) to the second tangent (62),
**characterized in that**, for the or each group of stiffening rivets (54), the stiffening rivets (50A, 50B, 50C, 50D) of said group (54) are arranged based on a distribution of the mechanical torsion stresses in each wall module (12).

2. The railway vehicle body (1) according to claim 1, wherein the curve (C) is in an arc of circle shape.

3. The railway vehicle body (1) according to claim 1 or 2, wherein the or each group of stiffening rivets (54) includes at least four stiffening rivets (50A, 50B, 50C, 50D).

4. The railway vehicle body (1) according to any one of claims 1 to 3, wherein the stiffening rivets (50A, 50B, 50C, 50D) are arranged in regions of the body (1) concentrating torques (M2) around axes transverse to a longitudinal direction of the body (1).

5. The railway vehicle body (1) according to any one of claims 1 to 4, wherein the or each wall module (12) comprises at least one upright (20), at least one group of stiffening rivets (54) being arranged at a lower end (22) of the or each upright (20).

6. The railway vehicle body (1) according to any one of claims 1 to 5, wherein, for the or each group of stiffening rivets (54), the diameter of each stiffening rivet (50A, 50B, 50C, 50D) of said group (54) is equal to the diameter of each other stiffening rivet (50A, 50B, 50C, 50D) of said group (54).

7. The railway vehicle body (1) according to any one of claims 1 to 6, wherein the rivets comprise upper rivets (52) connecting the or each wall module (12) to the or each roof module (16), said upper rivets (52) comprising groups of linear rivets (52A, 52B, 52C), each group (52A, 52B, 52C) comprising at least three upper rivets (52) aligned with one another.

8. The railway vehicle body (1) according to any one of claims 1 to 7, wherein at least one of the modules from among the floor (10), wall (12) and roof (16) modules is made up of a pre-equipped module.

9. The railway vehicle body (1) according to any one of claims 1 to 8, wherein the modules (10, 12, 16) are electrically connected to one another by connectors.

10. A method for manufacturing a railway vehicle body (1) according to any one of claims 1 to 9, the body (1) comprising at least one floor module (10), at least one wall module (12) and at least one roof module (16), the method comprising the following steps:
- designing a model for the body (1), applying static and/or dynamic loads on this model of the body (1) in order to calculate the resultant stresses; and
- producing the body (1), the body (1) being assembled by fixing floor (10), wall (12) and roof (16) modules to one another by rivets (50, 52), the rivets (50, 52) comprising lower rivets (50) connecting the or each wall module (12) to the or each floor module (10), the lower rivets (50) comprising at least one group of stiffening rivets (54) including at least three stiffening rivets (50A, 50B, 50C, 50D) arranged based on the distribution in the body (1) of the stresses calculated during the design step,
the stiffening rivets (50A, 50B, 50C, 50D) being arranged in regions where mechanical torsional stresses are concentrated.

11. The manufacturing method according to claim 10, wherein the model designed during the design step is a computer model, the method comprising, between the design and production steps, an intermediate step for validating the body (1) through tests, during which a physical model of the body (1) is at least partially assembled and stresses resulting from static and/or dynamic loads applied in said physical model are measured, at an interface between the or each wall module (12) and the or each floor module (10), in order to validate the distribution of rivets (50, 52) and wherein, during the production step, the stiffening rivets (50A, 50B, 50C, 50D) are arranged based on results of the validation step.
